# EUROPEAN PATENT SPECIFICATION

(11) **EP 4 364 497 B1**
(45) Date of publication and mention of the grant of the patent: **25.03.2026**
(21) Application number: 21953096.1
(22) Date of filing: 11.08.2021
(51) Int. Cl.: H04L 5/00, H04W 8/18, H04W 76/15, H04W 76/34

(54) **COMMUNICATION DEVICE TRIGGERED AGGREGATION OPERATIONS**
DURCH KOMMUNIKATIONSVORRICHTUNG AUSGELÖSTE AGGREGATIONSOPERATIONEN
OPÉRATIONS D'AGRÉGATION DÉCLENCHÉES PAR UN DISPOSITIF DE COMMUNICATION

(43) Date of publication of application: 08.05.2024
(73) Proprietor: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); LU, Ting, Shenzhen, Guangdong 518057 (CN); NIU, Li, Shenzhen, Guangdong 518057 (CN); TAN, Jie, Shenzhen, Guangdong 518057 (CN)
(74) Representative: Vossius & Partner Patentanwälte Rechtsanwälte mbB
(86) International application number: PCT/CN2021/111951
(87) International publication number: WO 2023/015465

(56) References cited:
- WO-A1-2020/223219
- WO-A1-2020/223219
- CN-A- 110 999 449
- US-A1- 2019 342 921
- US-A1- 2020 266 955
- OPPO: "KI#3, Sol#7: Update to remove ENs", vol. SA WG2, no. Elbonia; 20200819 - 20200901, 13 August 2020 (2020-08-13), XP052462801, Retrieved from the Internet <URL:https://ftp.3gpp.org/tsg_sa/WG2_Arch/TSGS2_140e_Electronic/Docs/S2-2005252.zip S2-2005252_ProSe_KI#3, Sol#7 Update to remove ENs.doc> [retrieved on 20200813]
- OPPO: "Discussion on NR sidelink relay discovery", vol. RAN WG2, no. electronic; 20210412 - 20210420, 1 April 2021 (2021-04-01), XP051991991, Retrieved from the Internet <URL:https://ftp.3gpp.org/tsg_ran/WG2_RL2/TSGR2_113bis-e/Docs/R2-2103006.zip R2-2103006 Discussion on NR sidelink relay disovery.docx> [retrieved on 20210401]
- INTEL CORPORATION: "Control plane procedures for L2 U2N Relaying", vol. RAN WG2, no. E-meeting; 20210519 - 20210527, 11 May 2021 (2021-05-11), XP052006631, Retrieved from the Internet <URL:https://ftp.3gpp.org/tsg_ran/WG2_RL2/TSGR2_114-e/Docs/R2-2104888.zip R2-2104888_SLRelay_ControlPlane_Intel.docx> [retrieved on 20210511]
- LG ELECTRONICS, ERICSSON, HUAWEI, CATT, NOKIA, NOKIA SHANGHAI BELL: "Support of NR V2X over NG", 3GPP DRAFT; R3-204438, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. E-Meeting; 20200601 - 20200611, 23 June 2020 (2020-06-23), Mobile Competence Centre ; 650, route des Lucioles ; F-06921 Sophia-Antipolis Cedex ; France , XP051904198

## Description

### TECHNICAL FIELD

This disclosure is directed generally to digital wireless communications.

### BACKGROUND

Mobile telecommunication technologies are moving the world toward an increasingly connected and networked society. In comparison with the existing wireless networks, next generation systems and wireless communication techniques will need to support a much wider range of use-case characteristics and provide a more complex and sophisticated range of access requirements and flexibilities.

Long-Term Evolution (LTE) is a standard for wireless communication for mobile devices and data terminals developed by 3rd Generation Partnership Project (3GPP). LTE Advanced (LTE-A) is a wireless communication standard that enhances the LTE standard. The 5th generation of wireless system, known as 5G, advances the LTE and LTE-A wireless standards and is committed to supporting higher data-rates, large number of connections, ultra-low latency, high reliability and other emerging business needs. WO 2020/223219 A1 is related prior art.

### SUMMARY

This patent document describes communication device triggered aggregation transmission techniques that may be performed by a communication device, such as a user equipment (UE). The invention is specified by the independent claims. Preferred embodiments are defined in the dependent claims. In the following description, although numerous features may be designated as optional, it is nevertheless acknowledged that all features comprised in the independent claims are not to be read as optional.

A first wireless communication method includes transmitting, by a first network device to a first communication device, a first message that includes the aggregation related information of a second communication device with which the first communication device is configured to perform an aggregation operation with the second communication device; and receiving, from the first communication device, a second message that indicates that the first communication device received the first message.

In some embodiments, the method further includes transmitting, by the first network device to a second network device and prior to the transmitting the first message, a third message that requests an addition of a second communication device for an aggregation operation; and receiving, from the second network device and in response to the transmitting the third message, a fourth message that includes an aggregation related information of the second communication device. In some embodiments, the third message comprises any one or more of: a first identifier of the first communication device, a first configuration for a protocol data unit (PDU) session, or a second configuration for a quality of service (QoS) flow of a transmission or a reception by the aggregation operation. In some embodiments, the aggregation related information of the first message or of the fourth message comprises any one or more of: a radio configuration of the second communication device, or a second identifier of the second communication device.

In some embodiments, the third message is transmitted in response to the first network device receiving a fifth message from the second network device, and the fifth message comprising any one or more of a first identifier of the first communication device, a second identifier of the second communication device, or an association between the first communication device and the second communication device. In some embodiments, prior to the receiving the fifth message, the method further comprises: receiving, from the second communication device, a sixth message including the aggregation related information to request the aggregation operation; transmitting, to a core network device and in response to the receiving the sixth message, a seventh message that includes the aggregation related information to request for the aggregation operation; and receiving, from the core network device and in response to the transmitting the seventh message, an eighth message comprising the aggregation related information, wherein the aggregation related information includes any one or more of: an aggregation cause or indication, an address of the first communication device with which the second communication device is to perform the aggregation operation, a first identifier of a first communication device with which the second communication device is to perform the aggregation operation, a cell identifier of a cell to which the first communication device is connected or on which the first communication device is camped, or an identifier of a first network device or the second network device to which the first communication device is connected or on which the first communication device is camped.

In some embodiments, prior to the receiving the fifth message, the method further comprises: receiving, from the first communication device, a sixth message including the aggregation related information to request the aggregation operation; and transmitting paging to the second communication device in response to receiving the UE aggregation related information, or transmitting, to a core network device, a seventh message that includes the UE aggregation related information to request for the aggregation operation, wherein the aggregation related information includes any one or more of: a second identifier of the second communication device with which the first communication device is to perform the aggregation operation, a cell identifier of a cell to which the second communication device is connected or on which the second communication device is camped, an identifier of a first network device or the second network device to which the second communication device is connected or on which the second communication device is camped, or a first address of a first communication device with which the second communication device is to perform the aggregation operation. In some embodiments, the core network device includes an access and mobility management function (AMF).

In some embodiments, the first network device and the core network device are in a connection management (CM) connected state, and the first network device and the first communication device are in a radio resource control (RRC) connected state. In some embodiments, the core network device includes an access and mobility management function (AMF), a session management function (SMF), and an user plane function (UPF). In some embodiments, prior to the transmitting the third message, the method further comprises: transmitting, to the first communication device, a system information block (SIB) that includes an aggregation support indication that indicates to the first communication device that the first network device supports the aggregation operation.

A second wireless communication method includes transmitting, by a second communication device, a service request that includes an aggregation indication that indicates that the second communication device is configured to perform an aggregation operation; receiving, by the second communication device from a second network device, a first message that includes information related to the aggregation operation; and transmitting, by the second communication device to the second network device, a second message comprising an identifier of the second communication device, wherein the second message is transmitted in response to the receiving the first message.

In some embodiments, the service request is transmitted after receiving, by the second communication device, an aggregation support indication that indicates to the second communication device that the second network device supports the aggregation operation. In some embodiments, the first message comprises any one or more of: a first identifier of a first communication device with which the second communication device is to perform the aggregation operation, a first configuration for a protocol data unit (PDU) session of a transmission or a reception by the aggregation operation, or a second configuration for a quality of service (QoS) flow of the transmission or the reception by the aggregation operation. In some embodiments, prior to the transmitting the service request, the method further comprises: receiving, by the second communication device from a first communication device, a third message that requests to perform the aggregation operation; and transmitting, by the second communication device to the first communication device, a fourth message comprising an identifier of the second communication device, wherein the fourth message is transmitted in response to the receiving the third message.

In some embodiments, prior to the second communication device receiving data transmission request not using the aggregation operation, the second communication device is in radio resource control (RRC) connected state with the second network device, and in connection management (CM) connected state with an access and mobility management function (AMF) in a core network device. In some embodiments, in response to the second communication device receiving data transmission request not using the aggregation operation, the second communication device is in radio resource control (RRC) connected state with the second network device, and in connection management (CM) connected state with an access and mobility management function (AMF), a session management function (SMF), and an user plane function (UPF) in a core network device.

A third wireless communication method includes receiving, by a second network device from a second communication device in an inactive state, a service request that includes an aggregation cause or indication that indicates that the second communication device is configured to perform an aggregation operation; transmitting, by the second network device to a core network device, a first message comprising an aggregation related information; and receiving, by the second network device from the core network device, a second message that comprises the aggregation related information.

In some embodiments, the aggregation related information comprises any one or more of: the aggregation cause or indication, an address of a first communication device with which the second communication device is to perform the aggregation operation, a first identifier of a first communication device with which the second communication device is to perform the aggregation operation, a cell identifier of a cell to which the first communication device is connected or on which the first communication device is camped, or an identifier of a first network device or the second network device to which the first communication device is connected or on which the first communication device is camped. In some embodiments, prior to the receiving the service request, the method further comprises: transmitting, by the second network device to the second communication device, a system information block (SIB) that includes an aggregation support indication that indicates to the second communication device that the second network device supports the aggregation operation. In some embodiments, in response to the receiving the second message, the method further comprises: receiving, by the second network device from a first network device, a third message that requests an addition of the second communication device for the aggregation operation; and transmitting, by the second network device and in response to the receiving the third message, a fourth message that includes any one or more of: a radio configuration of the second communication device, or a second identifier of the second communication device.

In some embodiments, the core network device includes an access and mobility management function (AMF). In some embodiments, the inactive state includes a radio resource control (RRC) inactive state. In some embodiments, the second network device and the core network device are in a connection management (CM) connected state. In some embodiments, the core network device includes an access and mobility management function (AMF), a session management function (SMF), and an user plane function (UPF).

A fourth wireless communication method includes receiving, by a network device, from a second communication device a service request that triggers the network device to setup an aggregation operation; transmitting, by the network device and in response to the receiving the service request, a first message to a first core network device, where the first message triggers the first core network device to establish a protocol data unit (PDU) session between the first core network device and a second core network device; receiving, by the network device from the first core network device, a second message that establishes the PDU between the network device and the first core network device, where the second message includes one or more radio parameters that are reconfigured between the second communication device and the network device for a quality of service (QoS) flow; and transmitting, by the network device to the second communication device, a third message that includes the one or more radio parameters for the QoS flow.

In some embodiments, the first core network device includes an access and mobility management function (AMF). In some embodiments, the second core network device includes a session mobility management function (SMF).

A fifth wireless communication method includes transmitting, by a second network device to a first network device, a first message that triggers the first network device to trigger a first communication device to release a second communication device from an aggregation operation with the first communication device; receiving, from the first network device, a second message that confirms that the first communication device has removed the second communication device from the aggregation operation; and transmitting, by the second network device to the second communication device, a third message that indicates to the second communication to release a radio bearer corresponding to the aggregation operation, wherein the third message is transmitted in response to the receiving the second message.

In some embodiments, the first message includes a configuration of the second communication device that comprises any one or more of an identifier of the second communication device or an indicator to remove the second communication device.

A sixth wireless communication method includes receiving, by a second network device from a first network device, a first message that triggers the second network device to trigger a second communication device to be released from an aggregation operation with a first communication device; transmitting, by the second network device to the second communication device, a second message that indicates to the second communication device to release a radio bearer corresponding to the aggregation operation, where the second message is transmitted after the receiving the first message; and transmitting, by the second network device to the first network device and after the transmitting the second message, a third message that triggers the first network node to send a fourth message to the first communication node, wherein the fourth message comprises a configuration of the second communication device.

In some embodiments, the configuration of the second communication device comprises any one or more of an identifier of the second communication device or an indicator to remove the second communication device.

In yet another exemplary aspect, the above-described methods are embodied in the form of processor-executable code and stored in a non-transitory computer-readable storage medium. The code included in the computer readable storage medium when executed by a processor, causes the processor to implement the methods described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWING

FIG. 1 shows the User Plane data flow direction for UE aggregation.
FIG. 2 shows the protocol stack for the user plane for UE aggregation.
FIG. 3 shows another User Plane data flow direction for UE aggregation.
FIG. 4 shows another protocol stack for the control plane for UE aggregation.
FIG. 5 shows the PDCP part1 and part2 split case.
FIG. 6 shows the Control Plane signaling flow for UE aggregation.
FIG. 7 shows the protocol stack for the control plane for UE aggregation.
FIG. 8A shows UE aggregation procedure triggered by UE.
FIG. 8B shows UE aggregation procedure requested by the primary UE.
FIG. 8C shows UE aggregation procedure requested by the primary UE when the primary UE and the secondary UE camps on the same gNB.
FIG. 9 shows the UE aggregation procedure triggered by UE when secondary UE is in RRC_INACTIVE.
FIG. 10 shows the concurrent MT service setup procedure for the secondary UE.
FIG. 11 shows the concurrent MO service setup procedure for the secondary UE.
FIG. 12 shows the Secondary UE removing procedure triggered by secondary gNB.
FIG. 13 shows the secondary UE removing procedure triggered by primary gNB.
FIG. 14 shows the secondary UE removing procedure triggered by UE.
FIG. 15 shows the secondary UE deactivating procedure by gNB.
FIG. 16 shows the secondary UE deactivating procedure triggered by secondary gNB.
FIG. 17 shows the secondary UE deactivating procedure triggered by primary gNB.
FIG. 18 shows the secondary UE activating procedure.
FIG. 19 shows the secondary UE activating procedure triggered by secondary gNB.
FIG. 20 shows the secondary UE activating procedure triggered by primary gNB.
FIG. 21 shows the secondary UE activating/deactivating procedure triggered by UE.
FIG. 22 shows the UE aggregation flow control procedure.
FIG. 23 shows the UE aggregation flow control MAC CE.
FIG. 24 shows the UE aggregation flow control MAC CE for different DRB.
FIG. 25 shows an exemplary block diagram of a hardware platform that may be a part of a network device or a user equipment.
FIG. 26 shows an example of wireless communication including a base station (BS) and user equipment (UE) based on some implementations of the disclosed technology.
FIGS. 27-32 show exemplary flowcharts for facilitating an aggregation operation.

### DETAILED DESCRIPTION

In the radio communication, various type of service (e.g. augmented reality (AR), virtual reality (VR), video with large number of pixels, etc.,) may have high data rate and/or need large transmission bandwidth (e.g., eMBB service), which may be impossible or difficult to be provided by a single UE, especially by a low capability UE (e.g. a sensor UE). Furthermore, the UE may find it impossible or difficult to provide a sufficiently high data rate at a cell edge because the UE transmission power may be limited at the cell edge. If multiple UEs can be aggregated to transmit and/or receive, the high data rate and /or large transmission bandwidth can be obtained. This patent application describes techniques to aggregate one or more UEs to perform transmission and/or reception initiated by UE.

The following table provides a list of acronyms that may be used in this patent document and their corresponding full names:

| Acronym | Full Name |
|---|---|
| AUSF | Authentication Server Function |
| HSS | Home Subscriber Server |
| UDM | Unified Data Management |
| UPF | User Plane Function |
| SMF | Session Management Function |
| AMF | Access and Mobility Management Function |
| NAS | Non-Access- Stratum |
| RRC | Radio Resource Control |
| PDCP | Packet Data Convergence Protocol |
| RLC | Radio Link Control |
| MAC | Medium Access Control |
| PHY | Physical layer |
| UE | User Equipment |
| UP | User Plane |
| CN | Core Network |
| UE AP ID | UE Application Protocol ID |
| DN | Data Network |

In the following example embodiments for UE aggregation, the following assumptions can be made: one UE is used as the primary UE or anchor UE, which can connect to the application layer or DN; one or more other UEs are used as the secondary UEs or non-anchor UEs, which can only assist the primary UE or anchor UE to transmit and/or receive user data. The terms "primary UE" and "secondary UE" are used separately for these UEs in this patent document. The terms "primary UE" and "secondary UE" can be respectively substituted by "anchor UE" and "non-anchor UE" separately without changing the implementation

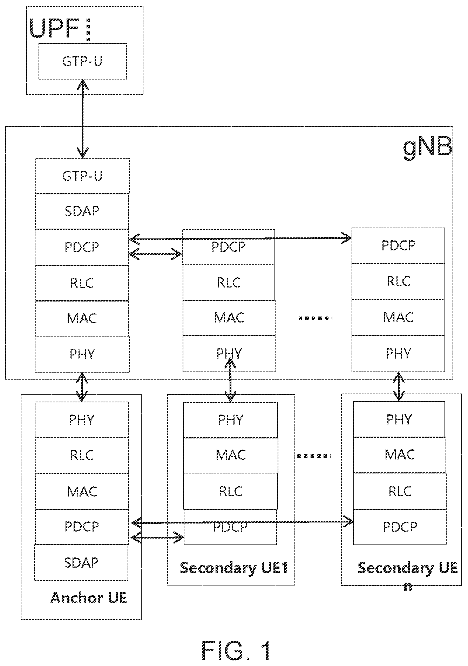

FIG. 1 shows the User Plane data flow direction for UE aggregation. In FIG. 1, only primary UE has the full protocol entity (e.g. has PDCP and SDAP entity, and the related GTP-U tunnel). In FIG. 1, the secondary UEs have only the RLC, MAC, PHY and PDCP entity. The PDCP context of the secondary UE mirrors the PDCP context of the primary PDCP. In gNB, the PDCP context corresponding the secondary UE also mirrors the PDCP context corresponding the primary UE.

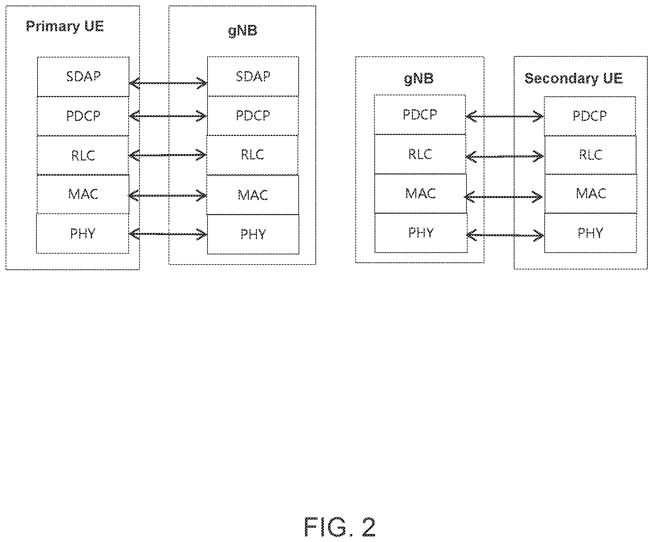

FIG. 2 shows the protocol stack for the user plane for UE aggregation. In FIG. 2, only primary UE has the full protocol entity (e.g., including SDAP, PDCP, RLC, MAC and PHY sublayers (or entity). The secondary UEs have only the PDCP, RLC, MAC and PHY entity.

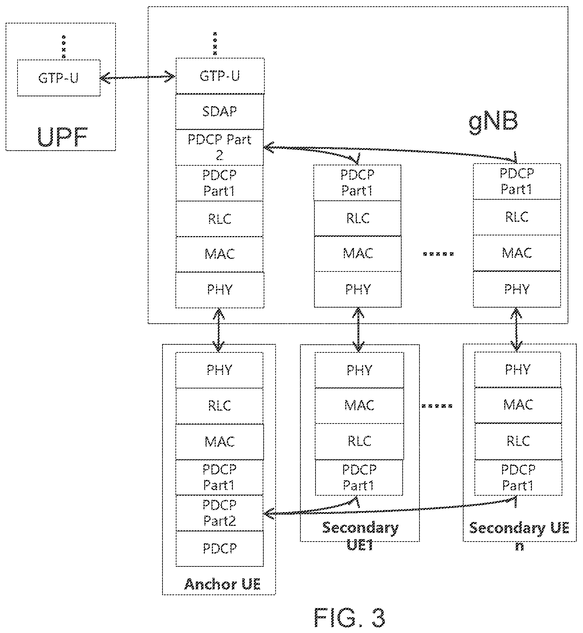

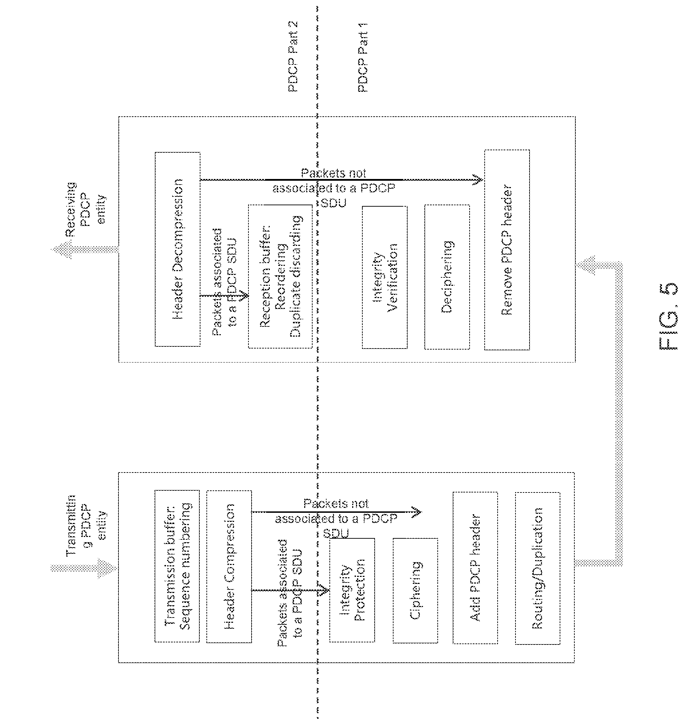

FIG. 3 shows another User Plane data flow direction for UE aggregation. In FIG. 3, only primary UE has the full protocol entity (e.g., has PDCP and SDAP entity, and the related GTP-U tunnel). The secondary UEs have only the RLC, MAC, PHY and partial PDCP(e.g. PDCP part 1 as shown in FIG. 5) entity. The PDCP part1 of secondary UE transmits user data to the PDCP part 2 of primary UE and/or receives user data from the PDCP part2 of primary UE. In gNB, the sublayer or entity play the same role as that in UE.

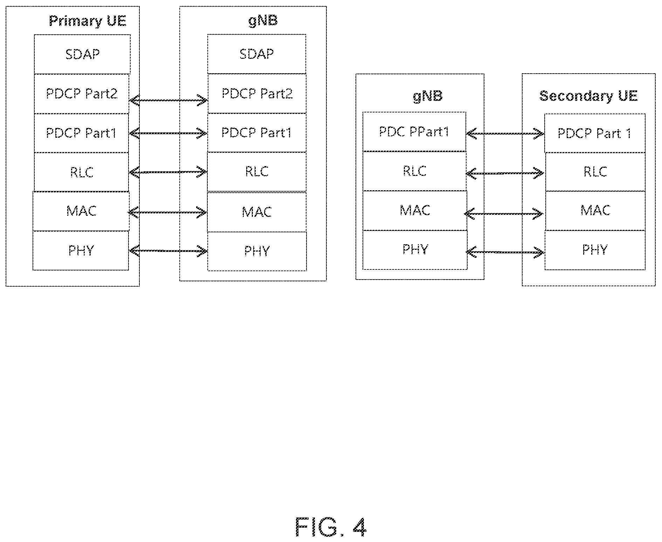

FIG. 4 shows another protocol stack for the user plane for UE aggregation. In FIG. 4, only primary UE has the full protocol entity (e.g., has PDCP and SDAP entity, and the related GTP-U tunnel). The secondary UEs have only the RLC, MAC, PHY and partial PDCP (e.g. PDCP part 1 as shown in FIG. 5) entity.

FIG. 5 shows the PDCP part1 and part2 split case as used in FIGS. 3 to 4. In FIG. 5, for Transmitting PDCP entity, the PDCP part2 includes: Transmission buffer, Sequence numbering, Header Compression. The PDCP part1 includes: Integrity Protection, Ciphering, Add PDCP header, Routing/Duplication. In FIG. 5, for Receiving PDCP entity, the PDCP part2 includes: Header Decompression, Reception buffer, Reordering, Duplicate discarding. the PDCP part1 includes: Integrity Verification, Deciphering, Remove PDCP header.

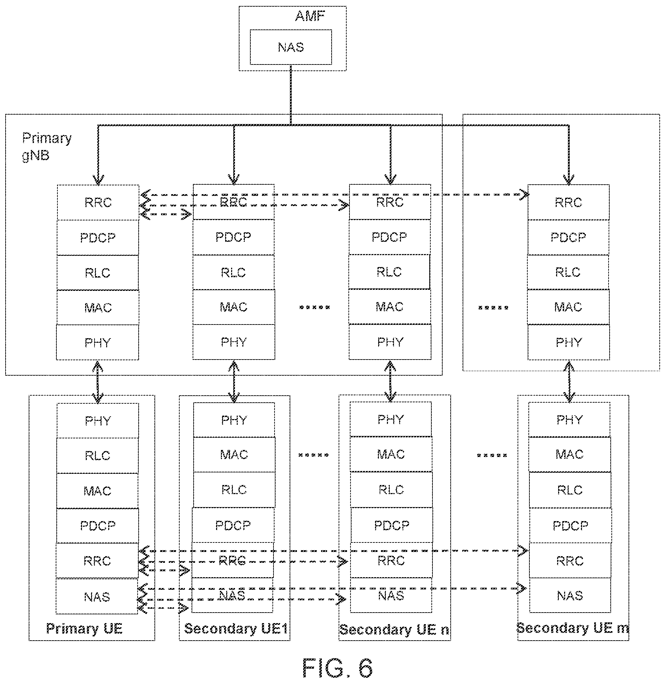

FIG. 6 shows the Control Plane signaling flow for UE aggregation. In FIG. 6, every UE has full protocol entity (e.g. NAS, RRC, PDCP, RLC, MAC, PHY), and the RRC configuration for secondary UE is coordinated with the RRC configuration for the primary UE in the gNB, the UE aggregation to be triggered is coordinated between UEs in RRC or NAS.

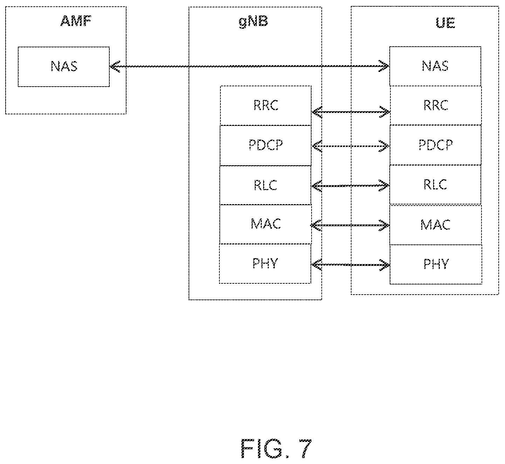

FIG. 7 shows the protocol stack for the control plane for UE aggregation. In FIG. 7, all the UEs have full protocol entity (e.g., NAS, RRC, PDCP, RLC, MAC, PHY) and each UE can exchange the NAS signaling with the NAS entity of AMF.

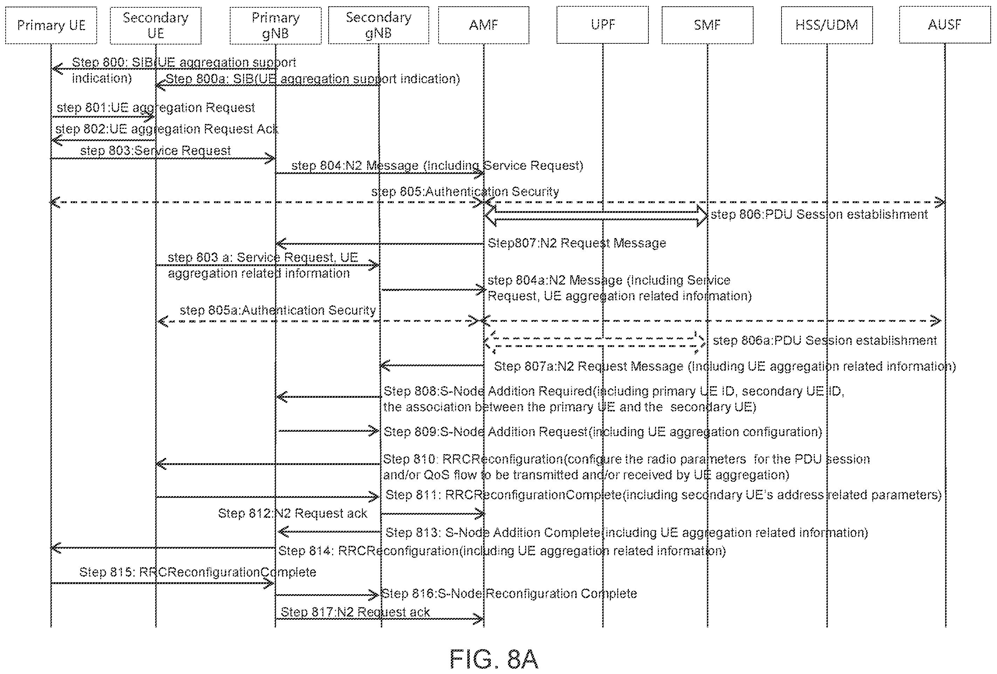

In FIGS. 8A to 22, the operations may be described next, above, or below the arrows that can indicate the information that is communicated and/or operation(s) that is/are performed.

FIG. 8A shows UE aggregation procedure triggered by UE. In FIG. 8A, Step 800: gNB sends it's UE aggregation support indication by SIB to UE. The UE aggregation support indication indicates that a cell of the gNB supports UE aggregation operation, e.g., the cell supports multiple UEs working together to perform data transmission and/or reception.

Step 801~802: Primary UE sends UE aggregation Request to the secondary UE, and the secondary UE sends UE aggregation Request acknowledge to the primary UE including at least one of: the secondary UE ID, or the secondary UE's address. Wherein the request and request acknowledge can be send via sidelink with announce mechanism, or with Wi-Fi, Bluetooth, wireline etc.

Upon both primary UE and secondary UE can perform UE aggregation transmission and/or reception, both UEs triggers the mobile originated (MO) setup procedure to establish the UE aggregation link. In some embodiments, as further described in FIG. 1, the UE can perform the UE aggregation transmission and/or reception either by (1) transmitting or receiving data to/from the primary gNB, or by (2) transmitting or receiving a part of data (a part of PDCP PDU set ) to/from the primary gNB by itself, and transmitting or receiving another part of data (a part of PDCP PDU set ) to/from the primary gNB via the secondary UE.

Step 803 to step 806, the primary UE perform MO setup procedure using, for example, current techniques.

Step 807, the N2 Request message sent for the primary UE.

Step 803a to step 804a, the secondary UE perform MO setup procedure. Wherein UE aggregation related information is included in the service request, or is sent associated with the service request. UE aggregation related information includes as least one of the following: UE aggregation cause or aggregation indication, primary UE ID, the cell ID that the primary UE camps, the gNB ID that the primary UE camps. The aggregation cause or aggregation indication indicates to the gNB that the RRC connection procedure is triggered by UE aggregation procedure, that the RRC connection procedure is used for UE aggregation procedure, or that the UE (e.g., secondary UE in FIG. 8A) is configured to or is capable of performing the aggregation operation.

Upon receiving the service request with UE aggregation related information, the AMF does or does not trigger the PDU session establishment among AMF, UPF and SMF. (e.g. the step 806a may be not necessary).

Step 807a, the N2 Request message for the secondary UE includes: the UE aggregation related information to gNB. Wherein the UE aggregation related information includes at least one of the following: UE aggregation cause or indication, primary UE ID, primary UE's address, the identity of cell that the primary UE camps, the identity of gNB that the primary UE camps. Wherein the N2 message is INITIAL UE MESSAGE.

Step 808: The secondary gNB triggers Xn UE-tunnel establishment. e.g. the secondary gNB sends S-Node Addition Required including UE aggregation related info to the primary gNB. Wherein the UE aggregation related info includes at least one of the following: primary UE ID, secondary UE ID, the association between primary UE and secondary UE.

Step 809: The primary gNB responses with S-Node Addition Request including UE aggregation configuration to the secondary gNB. Wherein the UE aggregation configuration includes at least one of the following: radio parameters configured by primary gNB based on the primary UE's AS parameters, configuration for the PDU session and/or QoS flow to be transmitted and/or received by UE aggregation, the primary UE's address related parameters for DL data forwarding. Wherein the primary UE's address includes at least one of the: UE ID, UE AP ID, the Tunnel Endpoint Identifier (TEID) for DL data forwarding between aggregated UEs, the IP address of the primary UE, the PC5 tunnel address, the UP Transport Layer Information used for DL data forwarding, destination Layer-2 ID, source Layer-2 ID, sl-DestinationIdentity, the relationship between identity and UE etc.

Step 810: The secondary gNB configure the radio parameters by RRCReconfiguration to UE based on the primary UE's AS parameters, configuration for the PDU session and/or QoS flow to be transmitted and/or received by UE aggregation. The secondary gNB also configures the primary UE's address related parameters by RRCReconfiguration to UE for DL data forwarding.

Wherein the primary UE's address includes at least one of the: UE ID, UE AP ID, the Tunnel Endpoint Identifier (TEID) for DL data forwarding between aggregated UEs, the IP address of the primary UE, the PC5 tunnel address, the UP Transport Layer Information used for DL data forwarding, destination Layer-2 ID, source Layer-2 ID, sl-DestinationIdentity, the relationship between identity and UE etc.

Step 811:Upon receiving RRCReconfiguration, the UE includes it's address related parameters in the RRCReconfigurationComplete. Wherein the UE's address includes at least one of the: UE ID, UE AP ID, the Tunnel Endpoint Identifier (TEID) for UL data forwarding between aggregated UEs, the IP address of the secondary UE, the PC5 tunnel address, the UP Transport Layer Information used for UL data forwarding, destination Layer-2 ID, source Layer-2 ID, sl-DestinationIdentity, the relationship between identity and UE etc.

Step 812: The secondary gNB sends N2 Request acknowledge to AMF. Till now, the secondary UE control plain connection has been establishment.

Step 813: The secondary gNB sends S-Node Addition complete including UE aggregation related information to the primary gNB. Till now, the Xn UE-tunnel has been established. Wherein the UE aggregation related information includes at least one of the following: the secondary UE radio configuration info, the secondary UE's address related parameters. Wherein the secondary UE's address includes at least one of the following: UE ID, UE AP ID, the Tunnel Endpoint Identifier (TEID) for UL data forwarding between aggregated UEs, the IP address of the secondary UE, the PC5 tunnel address, the UP Transport Layer Information used for UL data forwarding, destination Layer-2 ID, source Layer-2 ID, sl-DestinationIdentity, the relationship between identity and UE etc.

Step 814: Upon Xn UE-tunnel is established, the gNB sends RRCReconfiguration to the primary UE to configure the UE aggregation related information. Wherein the UE aggregation related information includes at least one of the following: the secondary UE radio configuration info, the secondary UE's address related parameters. Wherein the secondary UE's address includes at least one of the: UE ID, UE AP ID, the Tunnel Endpoint Identifier (TEID) for UL data forwarding between aggregated UEs, the IP address of the secondary UE, the PC5 tunnel address, the UP Transport Layer Information used for UL data forwarding, destination Layer-2 ID, source Layer-2 ID, sl-DestinationIdentity, the relationship between identity and UE etc.

Step 815: The primary gNB receives a RRCReconfigurationComplete message from the primary UE, where the RRCReconfigurationComplete message indicates that the primary UE has received the RRCReconfiguration message.

Step 816: The primary gNB sends S-Node reconfiguration complete message to the secondary gNB.

Step 817: The Primary gNB sends N2 request ack to AMF;

Till now, the UE aggregation link has been establishment, and data transmission and/or reception with UE aggregation can be performed.

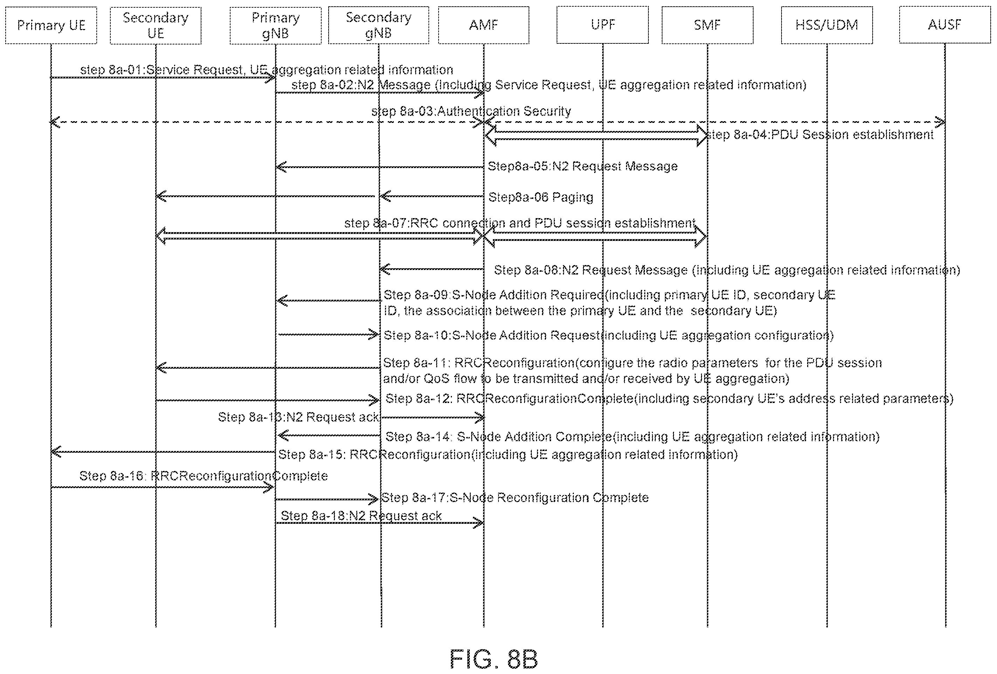

FIG. 8B shows UE aggregation procedure requested by the primary UE. In FIG. 8B, Step 8a-01: the primary UE perform MO setup procedure. Wherein UE aggregation related information is included in the service request, or is sent associated with the service request. UE aggregation related information includes as least one of the following: the secondary UE ID, the identity of cell that the secondary UE camps, the identity of gNB that the secondary UE camps, the primary UE's address.

Upon receiving the service request with UE aggregation related information, the AMF triggers the PDCU session establishment(step 8a-04) and send paging to the secondary UE(step 8a-06).

Upon receiving the paging, the secondary UE triggers RRC connection and PDU session establishment(step 8a-07).

Upon the completion of PDU session establishment, the AMF sends N2 Request Message including the UE aggregation related information to the secondary gNB.

Upon receiving the UE aggregation related information by the secondary gNB, the following procedures from step 8a-09 to step 8a-18 are the same as the procedures from step 808 to step 817 in FIG. 8A.

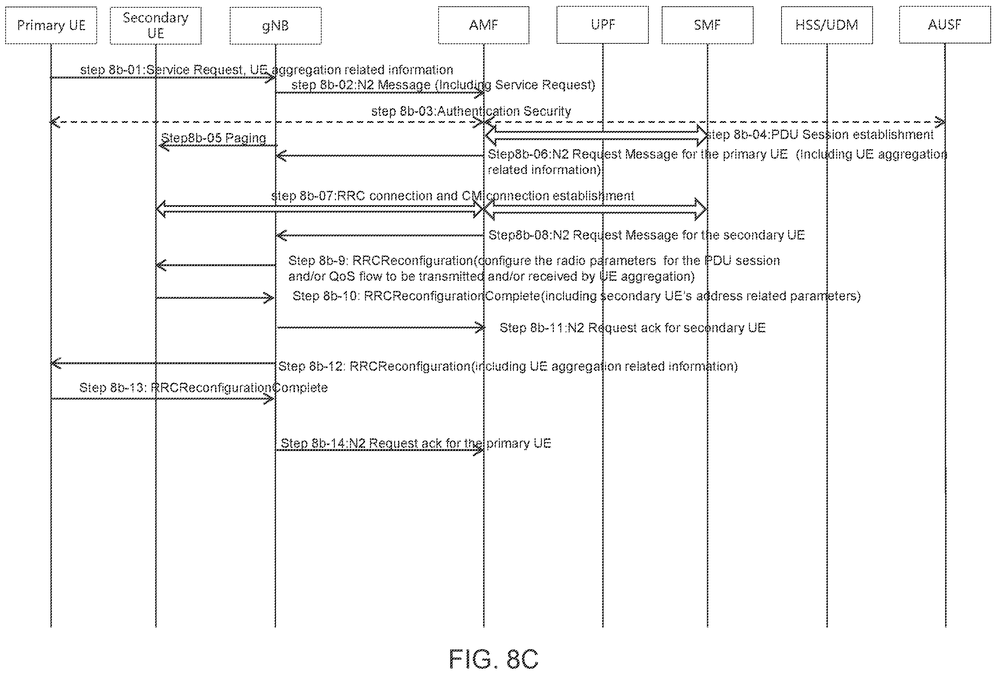

FIG. 8C shows UE aggregation procedure requested by the primary UE when the primary UE and the secondary UE camps on the same gNB. In FIG. 8C, the procedures are the same as that in FIG. 8B except that: UE aggregation related information is sent by AS message to the gNB. The gNB triggers paging to the secondary UE(step 8b-5) upon receiving the UE aggregation related information(Step 8b-1); The UE aggregation related information is not included in the N2 Request Message for the secondary UE.

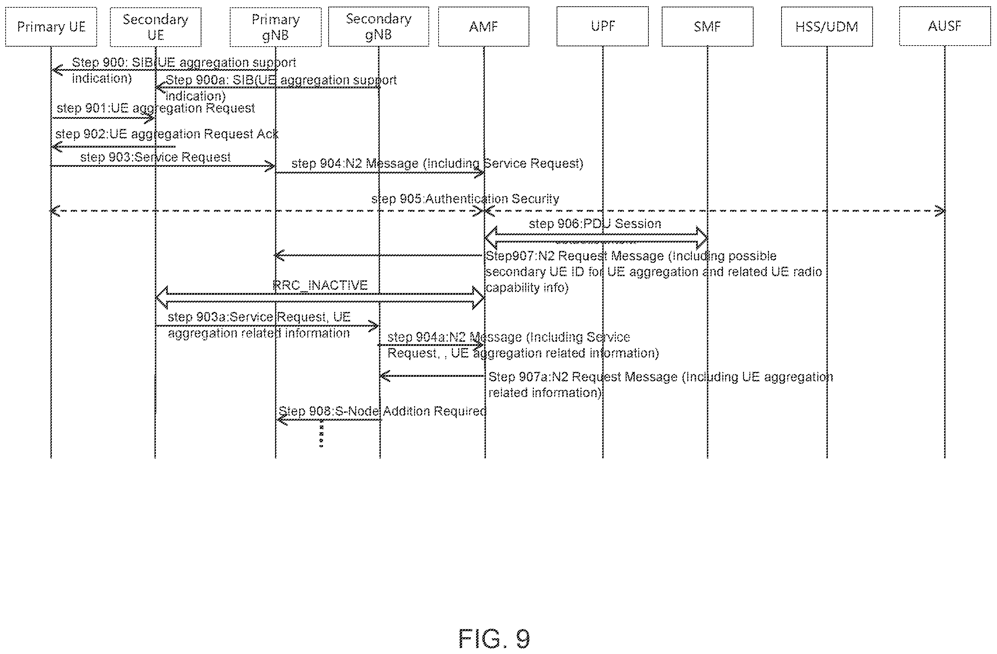

FIG. 9 shows the UE aggregation procedure triggered by UE when secondary UE is in RRC_INACTIVE. FIG. 9 describes operations, at least some of which are similar to the operations in FIG. 8A (e.g., step 903a is similar to step 803a and step 907a is similar to step 807a), except that:
- The secondary UE is in RRC _INACTIVE state, so the N2 message in step 904a is UPLINK NAS TRANSPORT or a new defined N2 message that can includes service request and UE aggregation related information. Wherein UE aggregation related information is included in the service request, or is sent associated with the service request. UE aggregation related information includes as least one of the following: UE aggregation cause or indication, primary UE ID, the cell ID that the primary UE camps, the gNB ID that the primary UE camps. The secondary UE is in RRC _INACTIVE state when the secondary UE sends service request in step 903a.
- The N2 request message is UE CONTEXT MODIFICATION REQUEST or a new defined N2 message.

The operations for Step 908 and onwards may be similar to steps 808 and onwards in FIG. 8A.

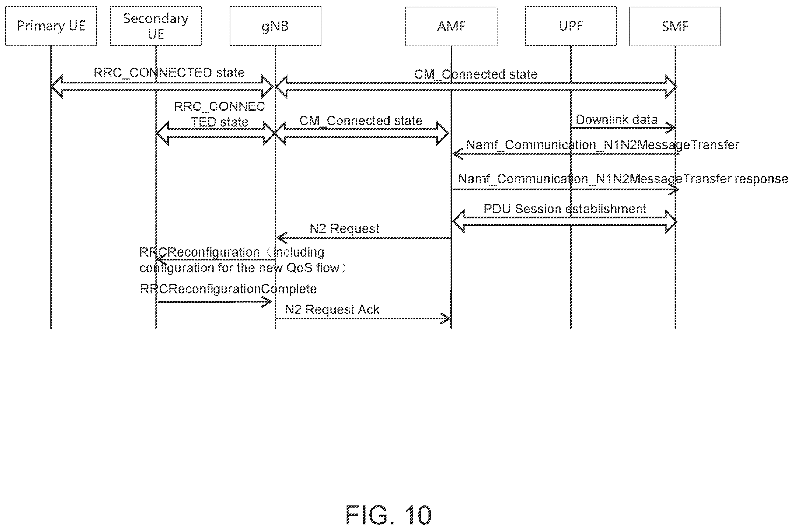

FIG. 10 shows the concurrent MT service setup procedure for the secondary UE. In FIG. 10, the primary UE and the secondary UE are performing UE aggregation transmission and/or reception. For example, the primary UE are in RRC_CONNECTED state between UE and gNB, and in CM_Connected state between gNB and AMF/UPF/SMF. While the secondary UE is only in RRC_CONNECTED state between UE and gNB, and in CM_Connected state between gNB and AMF, there is no PDU session connection between AMF and UPF/SMF.

Then Downlink data comes and MT service setup is triggered for the secondary UE: while the AMF receives Namf_Communication_N1N2MessageTransfer from SMF, it sends Namf_Communication_N1N2MessageTransfer response to SMF directly to trigger PDU session establishment for the MT service of the secondary UE (e.g. AMF neither triggers paging for the secondary UE, nor performs PDU session modification procedure) .

After PDU session has been established, the AMF sends N2 request message to establish the PDU session between AMF and gNB and reconfigures the radio parameters between UE and gNB for the new QoS flow. Wherein the N2 request message includes at least one of the following: UE CONTEXT MODIFICATION REQUEST, PDU SESSION RESOURCE SETUP REQUEST.

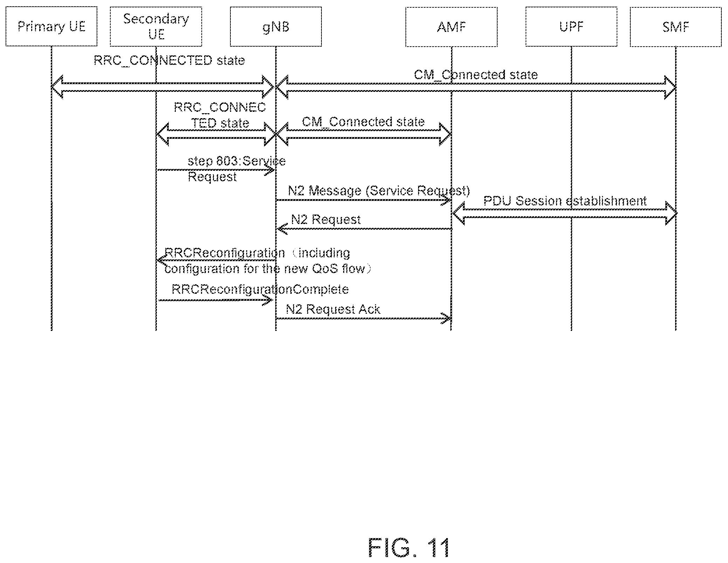

FIG. 11 shows the concurrent MO service setup procedure for the secondary UE. In FIG. 11, the primary UE and the secondary UE are performing UE aggregation transmission and/or reception. For example, the primary UE are in RRC_CONNECTED state between UE and gNB, and in CM_Connected state between gNB and AMF/UPF/SMF. While the secondary primary UE is only in RRC_CONNECTED state between UE and gNB, and in CM_Connected state between gNB and AMF, there is no PDU session connection between AMF and UPF/SMF.

Then the AMF receives service request for a new service setup from the secondary UE(e.g. triggered by a new PDU session), it triggers PDU session establishment(e.g. not PDU session update) between AMF and AMF/UPF, and then sends N2 request message to establish the PDU session between AMF and gNB, and reconfigures the radio parameters between UE and gNB for the new QoS flow. Wherein the N2 request message includes at least one of the following: UE CONTEXT MODIFICATION REQUEST, PDU SESSION RESOURCE SETUP REQUEST.

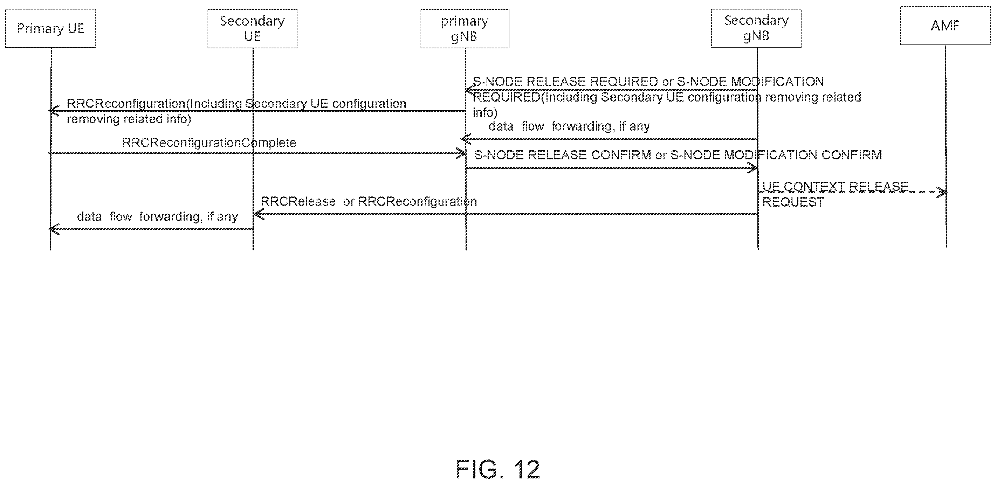

FIG. 12 shows the secondary UE removing procedure triggered by secondary gNB. In FIG. 12, the primary UE and the secondary UE are performing UE aggregation transmission and/or reception. For example, the primary UE are in RRC_CONNECTED state between UE and gNB, and in CM_Connected state between gNB and AMF/UPF/SMF. While the secondary UE is only in RRC_CONNECTED state between UE and gNB, and in CM_Connected state between gNB and AMF.

The secondary gNB sends S-NODE RELEASE REQUIRED or S-NODE MODIFICATION REQUIRED (Including Secondary UE configuration removing related info) to the primary gNB to trigger to release the secondary UE. If the secondary UE and primary UE locates in same gNB, this step is skipped.

If there is any UL data received or DL data to be transmitted corresponding to the removed radio bearer of UE aggregation, the secondary gNB forwards them to the gNB PDCP entity corresponding to the removed radio bearer of UE aggregation.

The primary gNB sends RRCReconfiguration including Secondary UE configuration removing related info to primary UE. The Secondary UE configuration removing related info includes at least one of the following: the UE ID of the secondary UE to be removed, the secondary UE removing indication.

The primary gNB sends S-NODE RELEASE CONFIRM or S-NODE MODIFICATION CONFIRM to the secondary gNB. If the secondary UE and primary UE locates in same gNB, this step is skipped.

The secondary gNB sends UE context release request to the AMF to release the N2 UE connection, if there is not other PDU session connection existing for the secondary UE, or if necessary, sends UE context modification required message to the AMF to update the N2 UE connection, if there is other PDU session connection existing for the secondary UE.

The secondary gNB sends RRCRelease message to the secondary UE to release the RRCConnection, or sends RRCReconfiguration message to the secondary UE to release the radio bearer corresponding to the UE aggregation.

Upon receiving the RRCRelease or the RRCReconfiguration message, if there is any UL data to be transmitted or DL data received corresponding to the removed radio bearer of UE aggregation, the secondary UE forwards them to the PDCP entity of the primary UE.

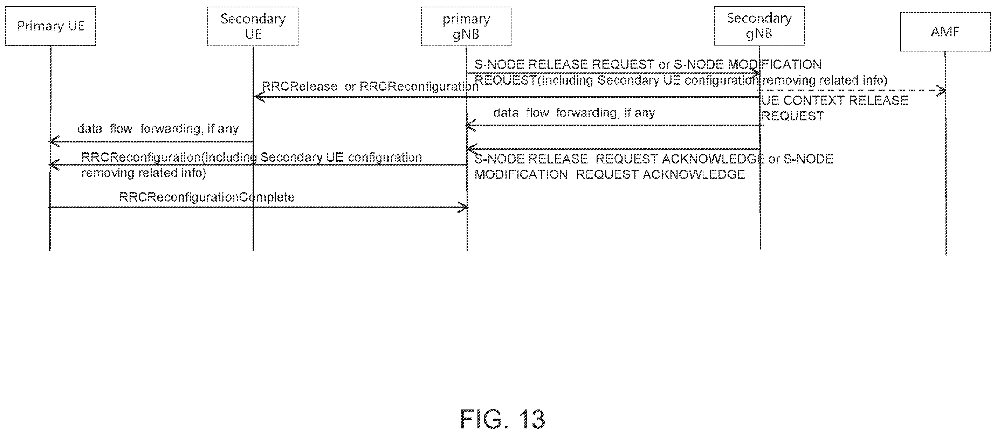

FIG. 13 shows the secondary UE removing procedure triggered by primary gNB. In FIG. 13, the primary gNB requests to remove one secondary UE of UE aggregation. The Primary gNB sends S-NODE RELEASE REQUEST or S-NODE MODIFICATION REQUEST(Including Secondary UE configuration removing related info) to the secondary gNB to trigger to release the secondary UE.

The secondary gNB sends UE context release request to the AMF to release the N2 UE connection, if there is not other PDU session connection existing for the secondary UE, or if necessary, sends UE context modification required message to the AMF to update the N2 UE connection, if there is other PDU session connection existing for the secondary UE.

The secondary gNB sends RRCRelease message, RRCReconfiguration message or MAC CE to the secondary UE to release the radio bearer corresponding to the UE aggregation. Wherein the MAC CE can be 0 bit(e.g. only MAC subheader is used), or some bit map where one bit corresponds to one UE state(value 0/1 indicates remove/not remove).

Upon receiving the RRCRelease, the RRCReconfiguration message or MAC CE, if there is any UL data to be transmitted or DL data received corresponding to the removed radio bearer of UE aggregation, the secondary UE forwards them to the PDCP entity of the primary UE.

If there is any UL data received or DL data to be transmitted corresponding to the removed radio bearer of UE aggregation, the secondary gNB forwards them to the gNB PDCP entity corresponding to the removed radio bearer of UE aggregation. If the secondary UE and primary UE locates in same gNB, this step is skipped.

The secondary gNB sends S-NODE RELEASE REQUEST ACKNOWLEDGE or S-NODE MODIFICATION REQUEST ACKNOWLEDGE to the primary gNB. If the secondary UE and primary UE locates in same gNB, this step is skipped.

The primary gNB sends RRCReconfiguration including Secondary UE configuration removing related info to primary UE. The Secondary UE configuration removing related info includes at least one of the following: the UE ID of the secondary UE to be removed, the secondary UE removing indication.

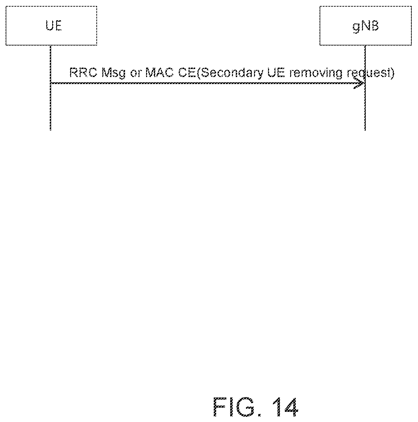

FIG. 14 shows the secondary UE removing procedure triggered by UE. In FIG. 14, the UE sends RRC Message or MAC CE to gNB, which includes secondary UE removing request information. The RRC Message comprises at least one of the following: RRCReleaseRequest, RRCReconfigurationRequest, UEAssistanceInformation.

For the Primary UE, the secondary UE removing request information includes at least one of the following: the secondary UE ID to be removed, the secondary UE removing indication. In MAC CE, the secondary UE removing indication can be indicated by specific LC-ID implicitly.

For the secondary UE, the secondary UE removing request information includes at least one of the following: the secondary UE removing indication. In MAC CE, the secondary UE removing indication can be indicated by specific LC-ID implicitly, e.g. 0 bit MAC CE can be used.

Upon receiving the secondary UE removing request information from secondary UE, the procedure shown in FIG. 12 will be performed.

Upon receiving the secondary UE removing request information from primary UE, the procedure shown in FIG. 13 will be performed.

After removing the secondary UE, the UE aggregation configuration is deleted, and the secondary UE cannot be used for UE aggregation transmission and/or reception anymore.

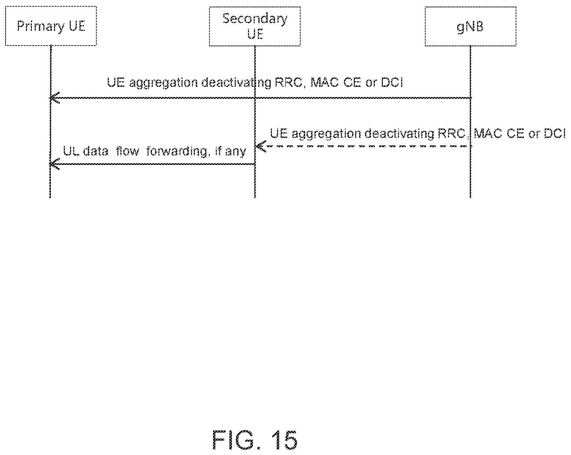

FIG. 15 shows the secondary UE deactivating procedure by gNB. In FIG. 15, the gNB sends deactivation information by RRC message, MAC CE or DCI to deactivate the secondary UE.

The deactivation information sent to the primary UE includes at least one of the following: the UE ID of the secondary UE to be deactivated, the deactivation indication.

The deactivation information sent to the secondary UE includes at least one of the following: the deactivation indication.

When the deactivation information is sent by MAC CE, the deactivation indication can be implicitly indicated by a specific LCID, and the MAC CE sent to the secondary UE can be zero bits.

After deactivating the secondary UE, the secondary UE is not used for UE aggregation transmission and/or reception, but the UE aggregation configuration are still kept.

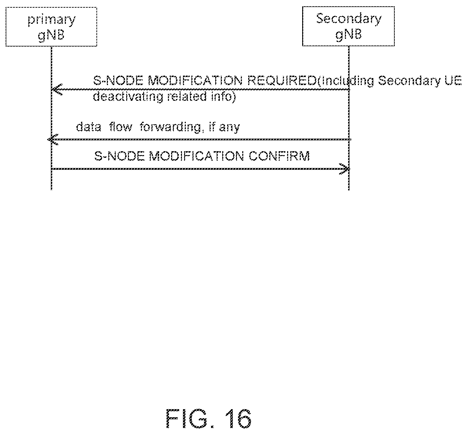

FIG. 16 shows the secondary UE deactivating procedure triggered by secondary gNB. In FIG. 16, the primary UE and the secondary UE locates in different gNBs, e.g. the secondary UE camps in the secondary gNB and the primary UE camps in the primary gNB.

When the secondary UE decides to deactivating it from the UE aggregation, it sends the S-NODE MODIFICATION REQUIRED including Secondary UE deactivating related info to the primary gNB to deactivate the secondary UE.

If there is any UL data received or DL data to be transmitted corresponding to the deactivating UE, the secondary gNB forwards them to the primary gNB.

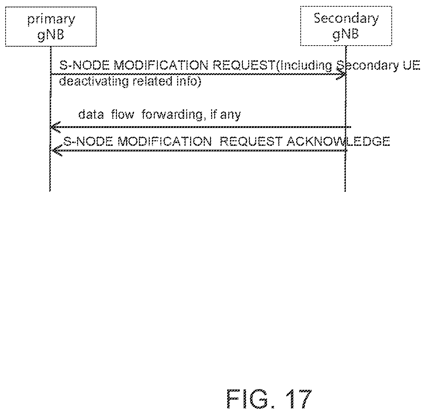

FIG. 17 shows the secondary UE deactivating procedure triggered by primary gNB. In FIG. 17, the primary UE and the secondary UE locates in different gNBs, e.g. the secondary UE camps in the secondary gNB and the primary UE camps in the primary gNB.

When the Primary UE decides to deactivating a secondary UE, it sends the S-NODE MODIFICATION REQUEST including Secondary UE deactivating related info to the secondary gNB to deactivate the secondary UE.

Upon receiving S-NODE MODIFICATION REQUEST including Secondary UE deactivating related info, if there is any UL data received or DL data to be transmitted corresponding to the deactivating UE, the secondary gNB forwards them to the primary gNB, and sends S-NODE MODIFICATION REQUEST ACKNOWLEDGE to notify the primary gNB to deactivate the secondary UE.

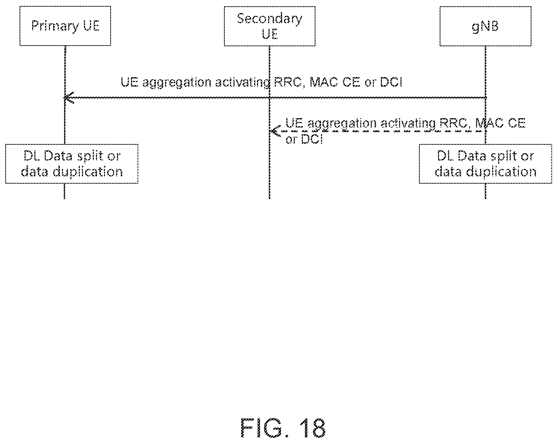

FIG. 18 shows the secondary UE activating procedure. In FIG. 18, the gNB sends activation information by RRC message, MAC CE or DCI to activate the secondary UE.

The activation information sent to the primary UE includes at least one of the following: the UE ID of the secondary UE to be activated, the activation indication.

The activation information sent to the secondary UE includes at least one of the following: the activation indication.

When the activation information is sent by MAC CE, the activation indication can be implicitly indicated by a specific LCID, and the MAC CE sent to the secondary UE can be zero bits.

After activating the secondary UE, the secondary UE can be used for UE aggregation transmission and/or reception, e.g. the gNB can split or duplicate the primary UE's DL data to be transmitted by both primary UE and the secondary UE, the primary UE can split or duplicate it's UL data to be transmitted by both primary UE and the secondary UE.

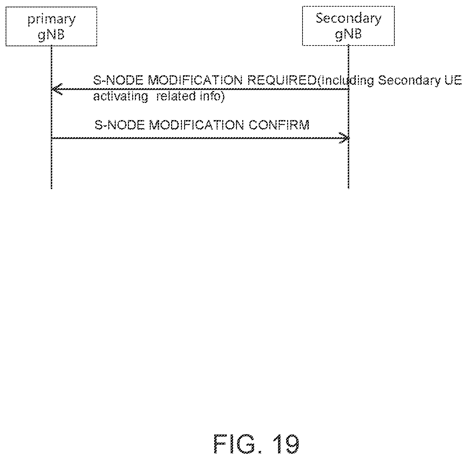

FIG. 19 shows the secondary UE activating procedure triggered by secondary gNB. In FIG. 19, the primary UE and the secondary UE locates in different gNBs, e.g. the secondary UE camps in the secondary gNB and the primary UE camps in the primary gNB.

When the secondary gNB decides to activating it for the UE aggregation, it sends the S-NODE MODIFICATION REQUIRED including Secondary UE activating related info to the primary gNB to active the secondary UE.

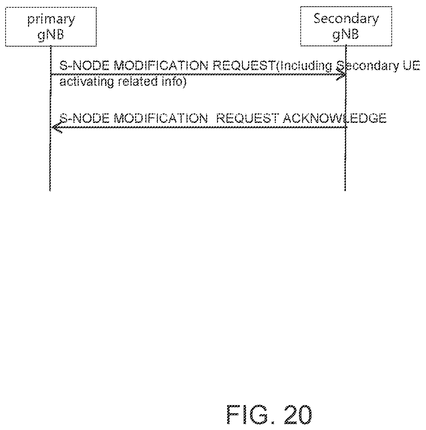

FIG. 20 shows the secondary UE activating procedure triggered by primary gNB. In FIG. 20, the primary UE and the secondary UE locates in different gNBs, e.g. the secondary UE camps in the secondary gNB and the primary UE camps in the primary gNB.

When the Primary UE decides to activating a secondary UE, it sends the S-NODE MODIFICATION REQUEST including Secondary UE activating related info to the secondary gNB to deactivate the secondary UE.

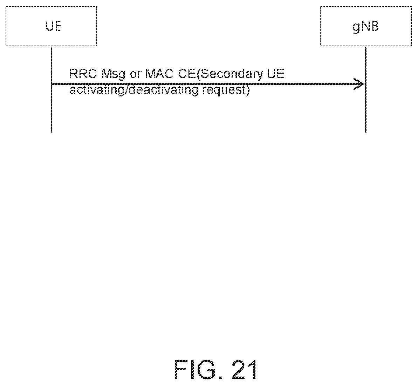

FIG. 21 shows the secondary UE activating/deactivating procedure triggered by UE. In FIG. 21, the UE sends RRC Message or MAC CE to gNB, which includes secondary UE activating/deactivating request information.

The RRC Message comprises ate least one of the following: RRCReconfigurationRequest, UEAssistanceInformation.

For the Primary UE, the secondary UE activating request information or deactivating request information includes at least one of the following: the secondary UE ID to be activated or deactivated, the secondary UE activating/deactivating indication. In MAC CE, the secondary UE activating or deactivating indication can be indicated by specific LC-ID implicitly.

For the secondary UE, the secondary UE removing request information includes at least one of the following: the secondary UE activating or deactivating indication. In MAC CE, the secondary UE activating or deactivating indication can be indicated by specific LC-ID implicitly, e.g. 0 bits MAC CE can be used.

Upon receiving the secondary UE activating or deactivating request information from secondary UE, the procedure shown in FIGS. 15, 16, 18 and/or 19 will be performed.

Upon receiving the primary UE activating or deactivating request information from primary UE, the procedure shown in FIGS. 15, 16, 17 and/or 20 will be performed.

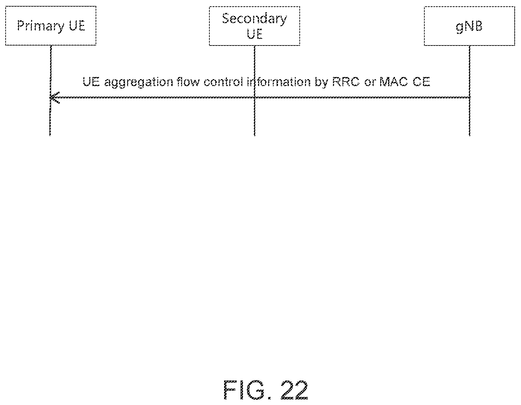

FIG. 22 shows the UE aggregation flow control procedure. Considering that different UEs may have different UE radio capability, and different UEs may in different radio conditions, the different UEs may provide different UU transmission and/or reception throughput.

For UE aggregation case, to provide maximal throughput for UU transmission and/or reception , gNB need to indicate the proportion or percentage of UL data that is split to each UEs. That means: the gNB should indicate the primary UE in information to assist to split UL data between different UEs, the information includes at least one of the: the proportion or percentage of UL data that should be split to each UEs, the data transmission state of each UE(e.g. normal, down), radio channel state of each UE(excellent, good, bad), CQI of each UE, BLER of each UE, maximal data rate that can be provided per each UE, the total data rate that can be provided per each UE.

The information can be sent by RRC or MAC CE.

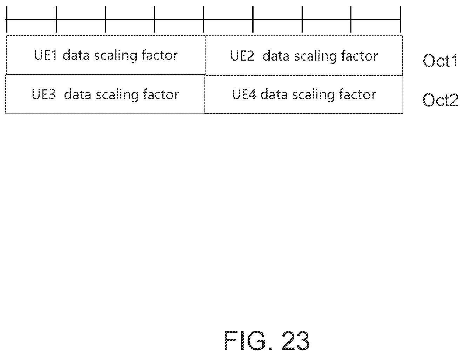

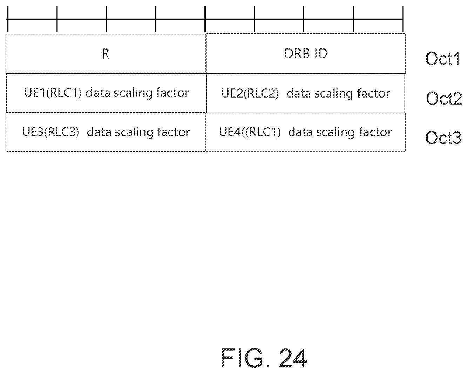

If the flow control information between UEs is sent by MC CE, the information included in MAC CE is shown in FIGS. 23 and 24.

FIG. 23 shows the UE aggregation flow control MAC CE. In FIG. 23, different DRBs of the primary UE to be transmitted or received by UE aggregation share the same flow control information. In which case, only the flow control information (e.g., UE data scaling factor, proportion or percentage of UL data per UE) should be indicated to the primary UE. In the example, 4bits is used for each UE as flow control, which may be different for different value range.

FIG. 24 shows the UE aggregation flow control MAC CE for different DRB. In FIG. 24, different DRBs of the primary UE to be transmitted or received by UE aggregation may have different flow control information. In which case, except the flow control information, DRB ID should also be included in the MAC CE.

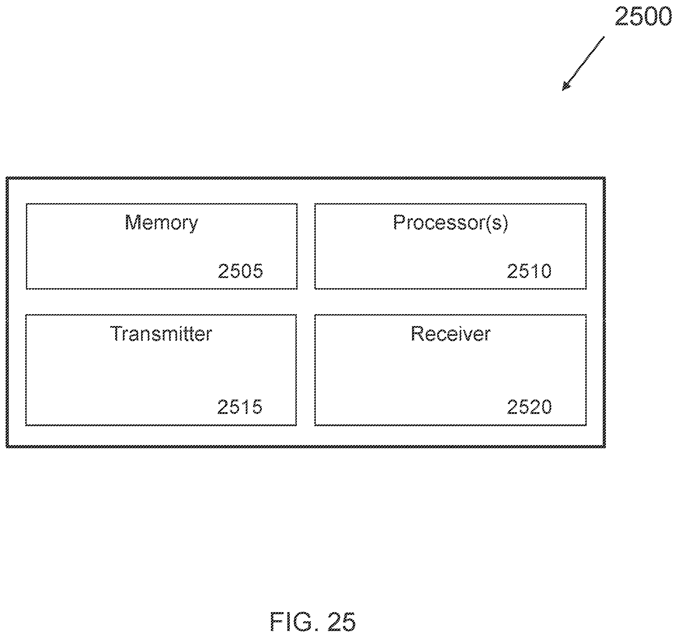

FIG. 25 shows an exemplary block diagram of a hardware platform 2500 that may be a part of a network device (e.g., base station) or a communication device (e.g., user equipment). The hardware platform 2500 includes at least one processor 2510 and a memory 2505 having instructions stored thereupon. The instructions upon execution by the processor 2510 configure the hardware platform 2500 to perform the operations described in FIGS. 1 to 24 and 26 to 32 and in the various embodiments described in this patent document. The transmitter 2515 transmits or sends information or data to another device. For example, a network device transmitter can send a message to a user equipment. The receiver 2520 receives information or data transmitted or sent by another device. For example, a user equipment can receive a message from a network device.

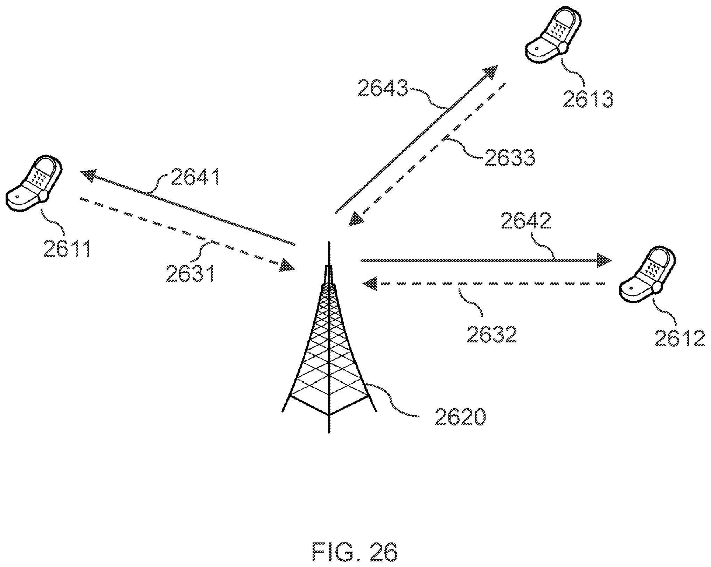

The implementations as discussed above will apply to a wireless communication. FIG. 26 shows an example of a wireless communication system (e.g., a 5G or NR cellular network) that includes a base station 2620 and one or more user equipment (UE) 2611, 2612 and 2613. In some embodiments, the UEs access the BS (e.g., the network) using a communication link to the network (sometimes called uplink direction, as depicted by dashed arrows 2631, 2632, 2633), which then enables subsequent communication (e.g., shown in the direction from the network to the UEs, sometimes called downlink direction, shown by arrows 2641, 2642, 2643) from the BS to the UEs. In some embodiments, the BS send information to the UEs (sometimes called downlink direction, as depicted by arrows 2641, 2642, 2643), which then enables subsequent communication (e.g., shown in the direction from the UEs to the BS, sometimes called uplink direction, shown by dashed arrows 2631, 2632, 2633) from the UEs to the BS. The UE may be, for example, a smartphone, a tablet, a mobile computer, a machine to machine (M2M) device, an Internet of Things (IoT) device, and so on.

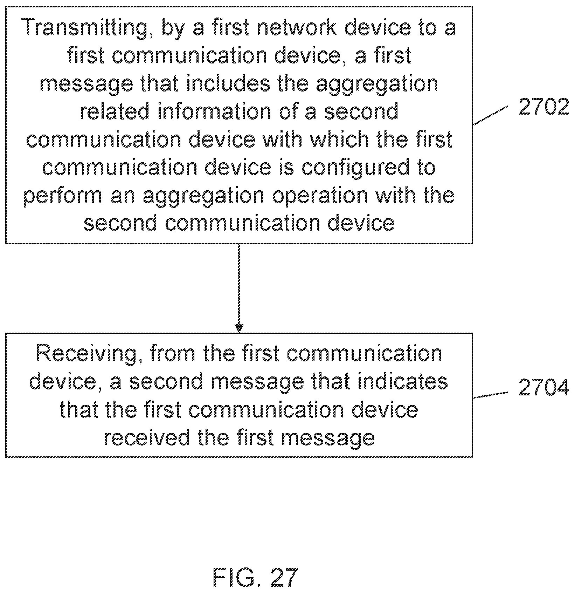

In the example flowcharts described in FIGS. 27-32, the terms described below on the left hand side may refer to terms on the right hand side as further described in this patent document:
- First network device may include primary gNB
- Second network device may include secondary gNB
- First communication device may include primary UE
- Second communication device may include secondary UE
- First message may include RRCReconfiguration (step 814) or RRCReconfiguration (step 810) or N2 message (step 904a)
- Second message may include RRCReconfigurationComplete (step 815) or RRCReconfigurationComplete (step 811) or N2 Request message (step 907a)
- Third message may include S-Node Addition Request (step 809)
- Fourth message may include S-Node Addition Complete (step 813)
- Fifth message may include S-Node Addition Required (step 808)
- Sixth message may include service request (step 803)
- Seventh message may include N2 message (step 804)
- Eighth message may include N2 request message (step 807)
- Service request may include service request (step 803a)

FIG. 27 shows an exemplary flowchart for facilitating an aggregation operation. Operation 2702 includes transmitting, by a first network device to a first communication device, a first message that includes the aggregation related information of a second communication device with which the first communication device is configured to perform an aggregation operation with the second communication device. Operation 2704 includes receiving, from the first communication device, a second message that indicates that the first communication device received the first message.

In some embodiments, the method further includes transmitting, by the first network device to a second network device and prior to the transmitting the first message, a third message that requests an addition of a second communication device for an aggregation operation; and receiving, from the second network device and in response to the transmitting the third message, a fourth message that includes an aggregation related information of the second communication device. In some embodiments, the third message comprises any one or more of: a first identifier of the first communication device, a first configuration for a protocol data unit (PDU) session, or a second configuration for a quality of service (QoS) flow of a transmission or a reception by the aggregation operation. In some embodiments, the aggregation related information of the first message or of the fourth message comprises any one or more of: a radio configuration of the second communication device, or a second identifier of the second communication device.

In some embodiments, the third message is transmitted in response to the first network device receiving a fifth message from the second network device, and the fifth message comprising any one or more of a first identifier of the first communication device, a second identifier of the second communication device, or an association between the first communication device and the second communication device. In some embodiments, prior to the receiving the fifth message, the method further comprises: receiving, from the second communication device, a sixth message including the aggregation related information to request the aggregation operation; transmitting, to a core network device and in response to the receiving the sixth message, a seventh message that includes the aggregation related information to request for the aggregation operation; and receiving, from the core network device and in response to the transmitting the seventh message, an eighth message comprising the aggregation related information, wherein the aggregation related information includes any one or more of: an aggregation cause or indication, an address of the first communication device with which the second communication device is to perform the aggregation operation, a first identifier of a first communication device with which the second communication device is to perform the aggregation operation, a cell identifier of a cell to which the first communication device is connected or on which the first communication device is camped, or an identifier of a first network device or the second network device to which the first communication device is connected or on which the first communication device is camped.

In some embodiments, prior to the receiving the fifth message, the method further comprises: receiving, from the first communication device, a sixth message including the aggregation related information to request the aggregation operation; and transmitting paging to the second communication device in response to receiving the UE aggregation related information, or transmitting, to a core network device, a seventh message that includes the UE aggregation related information to request for the aggregation operation, wherein the aggregation related information includes any one or more of: a second identifier of the second communication device with which the first communication device is to perform the aggregation operation, a cell identifier of a cell to which the second communication device is connected or on which the second communication device is camped, an identifier of a first network device or the second network device to which the second communication device is connected or on which the second communication device is camped, or a first address of a first communication device with which the second communication device is to perform the aggregation operation. In some embodiments, the core network device includes an access and mobility management function (AMF).

In some embodiments, the first network device and the core network device are in a connection management (CM) connected state, and the first network device and the first communication device are in a radio resource control (RRC) connected state. In some embodiments, the core network device includes an access and mobility management function (AMF), a session management function (SMF), and an user plane function (UPF). In some embodiments, prior to the transmitting the third message, the method further comprises: transmitting, to the first communication device, a system information block (SIB) that includes an aggregation support indication that indicates to the first communication device that the first network device supports the aggregation operation.

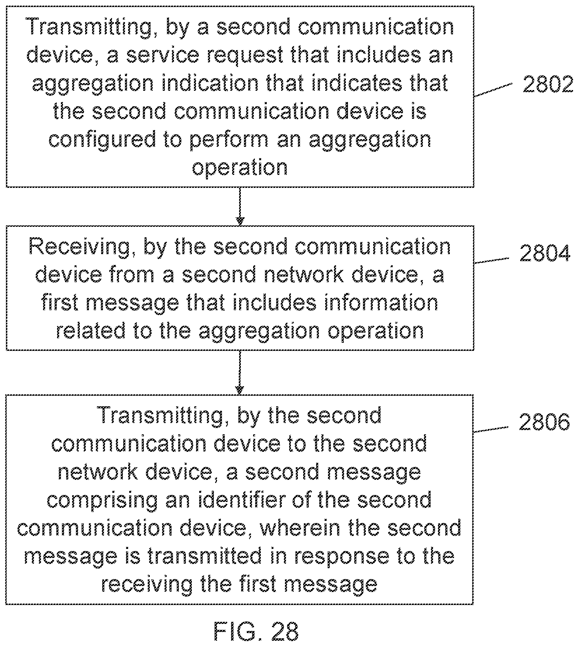

FIG. 28 shows an exemplary flowchart for facilitating an aggregation operation. Operation 2802 includes transmitting, by a second communication device, a service request that includes an aggregation indication that indicates that the second communication device is configured to perform an aggregation operation. Operation 2804 includes receiving, by the second communication device from a second network device, a first message that includes information related to the aggregation operation. Operation 2806 includes transmitting, by the second communication device to the second network device, a second message comprising an identifier of the second communication device, wherein the second message is transmitted in response to the receiving the first message.

In some embodiments, the service request is transmitted after receiving, by the second communication device, an aggregation support indication that indicates to the second communication device that the second network device supports the aggregation operation. In some embodiments, the first message comprises any one or more of: a first identifier of a first communication device with which the second communication device is to perform the aggregation operation, a first configuration for a protocol data unit (PDU) session of a transmission or a reception by the aggregation operation, or a second configuration for a quality of service (QoS) flow of the transmission or the reception by the aggregation operation. In some embodiments, prior to the transmitting the service request, the method further comprises: receiving, by the second communication device from a first communication device, a third message that requests to perform the aggregation operation; and transmitting, by the second communication device to the first communication device, a fourth message comprising an identifier of the second communication device, wherein the fourth message is transmitted in response to the receiving the third message.

In some embodiments, prior to the second communication device receiving data transmission request not using the aggregation operation, the second communication device is in radio resource control (RRC) connected state with the second network device, and in connection management (CM) connected state with an access and mobility management function (AMF) in a core network device. In some embodiments, in response to the second communication device receiving data transmission request not using the aggregation operation, the second communication device is in radio resource control (RRC) connected state with the second network device, and in connection management (CM) connected state with an access and mobility management function (AMF), a session management function (SMF), and an user plane function (UPF) in a core network device.

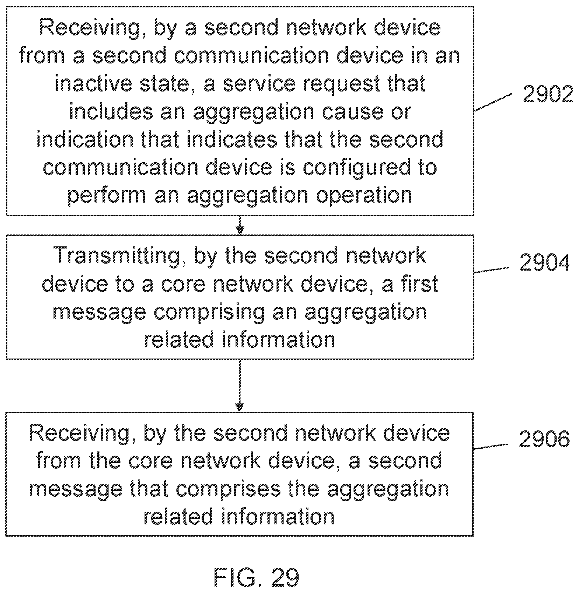

FIG. 29 shows an exemplary flowchart for facilitating an aggregation operation. Operation 2902 includes receiving, by a second network device from a second communication device in an inactive state, a service request that includes an aggregation cause or indication that indicates that the second communication device is configured to perform an aggregation operation. Operation 2904 includes transmitting, by the second network device to a core network device, a first message comprising an aggregation related information. Operation 2906 includes receiving, by the second network device from the core network device, a second message that comprises the aggregation related information.

In some embodiments, the aggregation related information comprises any one or more of: the aggregation cause or indication, an address of a first communication device with which the second communication device is to perform the aggregation operation, a first identifier of a first communication device with which the second communication device is to perform the aggregation operation, a cell identifier of a cell to which the first communication device is connected or on which the first communication device is camped, or an identifier of a first network device or the second network device to which the first communication device is connected or on which the first communication device is camped. In some embodiments, prior to the receiving the service request, the method further comprises: transmitting, by the second network device to the second communication device, a system information block (SIB) that includes an aggregation support indication that indicates to the second communication device that the second network device supports the aggregation operation. In some embodiments, in response to the receiving the second message, the method further comprises: receiving, by the second network device from a first network device, a third message that requests an addition of the second communication device for the aggregation operation; and transmitting, by the second network device and in response to the receiving the third message, a fourth message that includes any one or more of: a radio configuration of the second communication device, or a second identifier of the second communication device.

In some embodiments, the core network device includes an access and mobility management function (AMF). In some embodiments, the inactive state includes a radio resource control (RRC) inactive state. In some embodiments, the second network device and the core network device are in a connection management (CM) connected state. In some embodiments, the core network device includes an access and mobility management function (AMF), a session management function (SMF), and an user plane function (UPF).

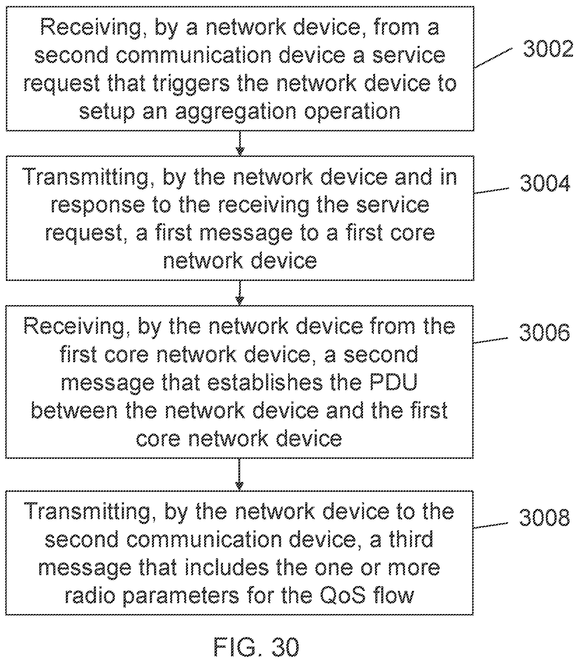

FIG. 30 shows an exemplary flowchart for facilitating an aggregation operation. Operation 3002 includes receiving, by a network device, from a second communication device a service request that triggers the network device to setup an aggregation operation. Operation 3004 includes transmitting, by the network device and in response to the receiving the service request, a first message to a first core network device, where the first message triggers the first core network device to establish a protocol data unit (PDU) session between the first core network device and a second core network device. Operation 3006 includes receiving, by the network device from the first core network device, a second message that establishes the PDU between the network device and the first core network device, where the second message includes one or more radio parameters that are reconfigured between the second communication device and the network device for a quality of service (QoS) flow. Operation 3008 includes transmitting, by the network device to the second communication device, a third message that includes the one or more radio parameters for the QoS flow.

In some embodiments, the first core network device includes an access and mobility management function (AMF). In some embodiments, the second core network device includes a session mobility management function (SMF).

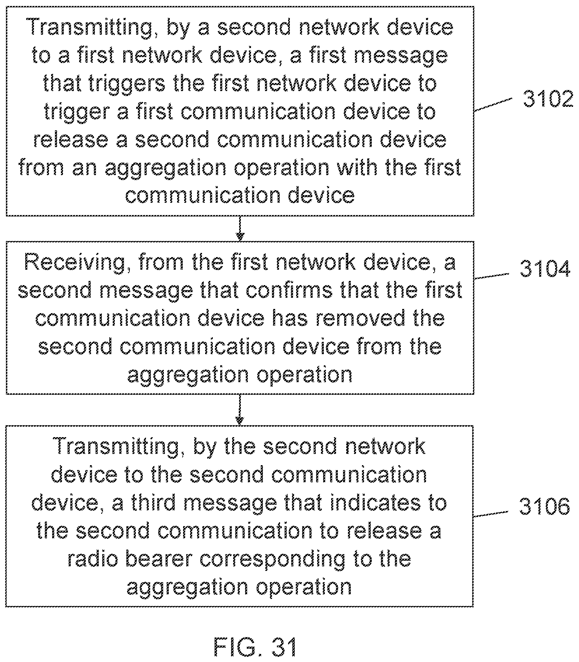

FIG. 31 shows an exemplary flowchart for facilitating an aggregation operation. Operation 3102 includes transmitting, by a second network device to a first network device, a first message that triggers the first network device to trigger a first communication device to release a second communication device from an aggregation operation with the first communication device. Operation 3104 includes receiving, from the first network device, a second message that confirms that the first communication device has removed the second communication device from the aggregation operation. Operation 3106 includes transmitting, by the second network device to the second communication device, a third message that indicates to the second communication to release a radio bearer corresponding to the aggregation operation, wherein the third message is transmitted in response to the receiving the second message.

In some embodiments, the first message includes a configuration of the second communication device that comprises any one or more of an identifier of the second communication device or an indicator to remove the second communication device.

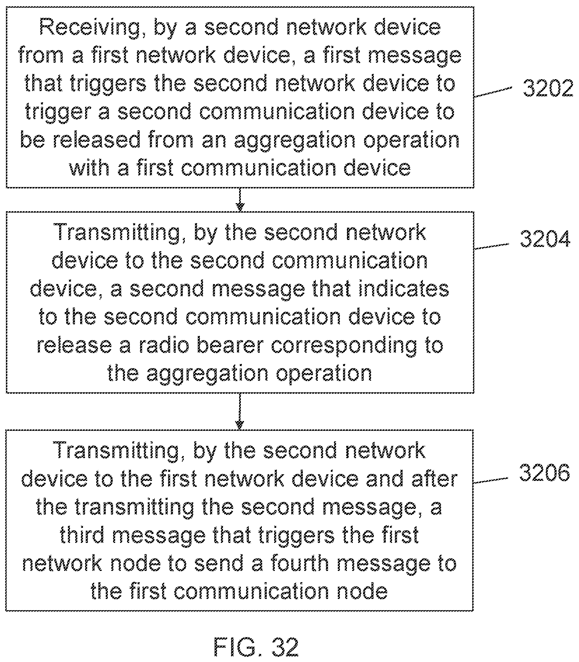

FIG. 32 shows an exemplary flowchart for facilitating an aggregation operation. Operation 3202 includes receiving, by a second network device from a first network device, a first message that triggers the second network device to trigger a second communication device to be released from an aggregation operation with a first communication device. Operation 3204 includes transmitting, by the second network device to the second communication device, a second message that indicates to the second communication device to release a radio bearer corresponding to the aggregation operation, where the second message is transmitted after the receiving the first message. Operation 3206 includes transmitting, by the second network device to the first network device and after the transmitting the second message, a third message that triggers the first network node to send a fourth message to the first communication node, wherein the fourth message comprises a configuration of the second communication device.

In some embodiments, the configuration of the second communication device comprises any one or more of an identifier of the second communication device or an indicator to remove the second communication device.

In this document, the primary gNB and the secondary gNB can be the same gNB, e.g. the primary UE and the secondary UE locates in the same gNB. In which case, the messages or steps between the primary gNB and the second gNB are skipped and does not impact the implementation. In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A wireless communication method, comprising:
receiving, by a second network device from a second communication device in an inactive state, a service request that includes an aggregation cause or indication that indicates that the second communication device is configured to perform an aggregation operation;
transmitting, by the second network device to a core network device, a first message comprising an aggregation related information;
receiving, by the second network device from the core network device, a second message that comprises the aggregation related information;
receiving, by the second network device from a first network device and in response to the receiving the second message, a third message that requests an addition of a first communication device for the aggregation operation; and
transmitting, by the second network device, to the first network device and in response to the receiving the third message, a fourth message that includes any one or more of:
a radio configuration of the second communication device, or
a second identifier of the second communication device.

2. The method of claim 1, wherein the aggregation related information comprises the aggregation cause or indication.

3. The method of claim 1, wherein prior to the receiving the service request, the method further comprises:
transmitting, by the second network device to the second communication device, a system information block, SIB, that includes an aggregation support indication that indicates to the second communication device that the second network device supports the aggregation operation.

4. The method of claim 1, wherein the core network device includes an access and mobility management function, AMF.

5. The method of claim 1, wherein the inactive state includes a radio resource control, RRC, inactive state.

6. The method of claim 1,
wherein the second network device and the core network device are in a connection management, CM, connected state.

7. The method of claim 6, wherein the core network device includes an access and mobility management function, AMF, a session management function, SMF, and an user plane function, UPF.

8. The method of claim 1, wherein the aggregation related information comprises an address of a first communication device with which the second communication device is to perform the aggregation operation.

9. The method of claim 1, wherein the aggregation related information comprises a first identifier of a first communication device with which the second communication device is to perform the aggregation operation.

10. The method of claim 1, wherein the aggregation related information comprises a cell identifier of a cell to which the first communication device is connected or on which the first communication device is camped.

11. The method of claim 1, wherein the aggregation related information comprises an identifier of a first network device or the second network device to which the first communication device is connected or on which the first communication device is camped.

12. An apparatus for wireless communication comprising a processor, configured to implement a method recited in one or more of claims 1 to 11.

13. A non-transitory computer readable program storage medium having code stored thereon, the code, when executed by a processor, causing the processor to implement a method recited in one or more of claims 1 to 11.

## Patentansprüche

1. Drahtloskommunikationsverfahren, aufweisend:
Empfangen, durch eine zweite Netzwerkvorrichtung von einer zweiten Kommunikationsvorrichtung in einem inaktiven Zustand, einer Dienstanforderung, die eine Aggregationsursache oder -anzeige einschließt, die anzeigt, dass die zweite Kommunikationsvorrichtung konfiguriert ist, um eine Aggregationsoperation durchzuführen;
Übertragen, durch die zweite Netzwerkvorrichtung an eine Kernnetzwerkvorrichtung, einer ersten Nachricht, die eine aggregationsbezogene Information aufweist;
Empfangen, durch die zweite Netzwerkvorrichtung von der Kernnetzwerkvorrichtung, einer zweiten Nachricht, die die aggregationsbezogene Information aufweist;
Empfangen, durch die zweite Netzwerkvorrichtung von einer ersten Netzwerkvorrichtung und als Reaktion auf das Empfangen der zweiten Nachricht, einer dritten Nachricht, die ein Hinzufügen einer ersten Kommunikationsvorrichtung für die Aggregationsoperation anfordert; und
Übertragen, durch die zweite Netzwerkvorrichtung, an die erste Netzwerkvorrichtung und als Reaktion auf das Empfangen der dritten Nachricht, einer vierten Nachricht, die eines oder mehrere der folgenden einschließt:
einer Funkkonfiguration der zweiten Kommunikationsvorrichtung, oder
einer zweiten Kennung der zweiten Kommunikationsvorrichtung.

2. Verfahren nach Anspruch 1, wobei die aggregationsbezogene Information die Aggregationsursache oder -anzeige aufweist.

3. Verfahren nach Anspruch 1, wobei das Verfahren vor dem Empfangen der Dienstanforderung ferner aufweist:
Übertragen, durch die zweite Netzwerkvorrichtung an die zweite Kommunikationsvorrichtung, eines Systeminformationsblocks, SIB, der eine Aggregationsunterstützungsanzeige einschließt, die der zweiten Kommunikationsvorrichtung anzeigt, dass die zweite Netzwerkvorrichtung die Aggregationsoperation unterstützt.

4. Verfahren nach Anspruch 1, wobei die Kernnetzwerkvorrichtung eine Zugriffs- und Mobilitätsverwaltungsfunktion, AMF, einschließt.

5. Verfahren nach Anspruch 1, wobei der inaktive Zustand einen inaktiven Zustand einer Funkressourcensteuerung, RRC, einschließt.

6. Verfahren nach Anspruch 1,
wobei sich die zweite Netzwerkvorrichtung und die Kernnetzwerkvorrichtung in einem verbundenen Zustand einer Verbindungsverwaltung, CM, befinden.

7. Verfahren nach Anspruch 6, wobei die Kernnetzwerkvorrichtung eine Zugriffs- und Mobilitätsverwaltungsfunktion, AMF, eine Sitzungsverwaltungsfunktion, SMF, und eine Benutzerebenenfunktion, UPF, einschließt.

8. Verfahren nach Anspruch 1, wobei die aggregationsbezogene Information eine Adresse einer ersten Kommunikationsvorrichtung aufweist, mit der die zweite Kommunikationsvorrichtung die Aggregationsoperation durchführen soll.

9. Verfahren nach Anspruch 1, wobei die aggregationsbezogene Information eine erste Kennung einer ersten Kommunikationsvorrichtung aufweist, mit der die zweite Kommunikationsvorrichtung die Aggregationsoperation durchführen soll.

10. Verfahren nach Anspruch 1, wobei die aggregationsbezogene Information eine Zellkennung einer Zelle aufweist, mit der die erste Kommunikationsvorrichtung verbunden ist oder auf der die erste Kommunikationsvorrichtung campt.

11. Verfahren nach Anspruch 1, wobei die aggregationsbezogene Information eine Kennung einer ersten Netzwerkvorrichtung oder der zweiten Netzwerkvorrichtung aufweist, mit der die erste Kommunikationsvorrichtung verbunden ist oder auf der die erste Kommunikationsvorrichtung campt.

12. Vorrichtung für Drahtloskommunikation, aufweisend einen Prozessor, der konfiguriert ist, um ein Verfahren, das in einem oder mehreren der Ansprüche 1 bis 11 angegeben ist, zu implementieren.

13. Nicht-transitorisches computerlesbares Programmspeichermedium, das darauf gespeicherten Code aufweist, wobei der Code, wenn er durch einen Prozessor ausgeführt wird, den Prozessor veranlasst, ein Verfahren, das in einem oder mehreren der Ansprüche 1 bis 11 angegeben ist, zu implementieren.

## Revendications

1. Procédé de communication sans fil, comprenant :
la réception, par un second dispositif de réseau en provenance d'un second dispositif de communication dans un état inactif, d'une demande de service qui comporte une cause ou une indication d'agrégation qui indique que le second dispositif de communication est configuré pour effectuer une opération d'agrégation ;
la transmission, par le second dispositif de réseau à un dispositif de réseau central, d'un premier message comprenant des informations relatives à l'agrégation ;
la réception, par le second dispositif de réseau en provenance du dispositif de réseau central, d'un deuxième message qui comprend les informations relatives à l'agrégation ;
la réception, par le second dispositif de réseau en provenance d'un premier dispositif de réseau et en réponse à la réception du deuxième message, d'un troisième message qui demande un ajout d'un premier dispositif de communication pour l'opération d'agrégation ; et
la transmission, par le second dispositif de réseau, au premier dispositif de réseau et en réponse à la réception du troisième message, d'un quatrième message qui comporte l'un ou plusieurs quelconques parmi :
une configuration radio du second dispositif de communication, ou
un second identifiant du second dispositif de communication.

2. Procédé selon la revendication 1, dans lequel les informations relatives à l'agrégation comprennent la cause ou l'indication d'agrégation.

3. Procédé selon la revendication 1, dans lequel, avant la réception de la demande de service, le procédé comprend en outre :
la transmission, par le second dispositif de réseau au second dispositif de communication, d'un bloc d'informations système, SIB, qui comporte une indication de prise en charge d'agrégation qui indique au second dispositif de communication que le second dispositif de réseau prend en charge l'opération d'agrégation.

4. Procédé selon la revendication 1, dans lequel le dispositif de réseau central comporte une fonction de gestion d'accès et de mobilité, AMF.

5. Procédé selon la revendication 1, dans lequel l'état inactif comporte un état de commande de ressources radio, RRC, inactif.

6. Procédé selon la revendication 1,
dans lequel le second dispositif de réseau et le dispositif de réseau central sont dans un état connecté de gestion de connexion, CM.

7. Procédé selon la revendication 6, dans lequel le dispositif de réseau central comporte une fonction de gestion d'accès et de mobilité, AMF, une fonction de gestion de session, SMF, et une fonction de plan utilisateur, UPF.

8. Procédé selon la revendication 1, dans lequel les informations relatives à l'agrégation comprennent une adresse d'un premier dispositif de communication avec lequel le second dispositif de communication doit effectuer l'opération d'agrégation.

9. Procédé selon la revendication 1, dans lequel les informations relatives à l'agrégation comprennent un premier identifiant d'un premier dispositif de communication avec lequel le second dispositif de communication doit effectuer l'opération d'agrégation.

10. Procédé selon la revendication 1, dans lequel les informations relatives à l'agrégation comprennent un identifiant de cellule d'une cellule à laquelle le premier dispositif de communication est connecté ou sur laquelle le premier dispositif de communication est en veille.

11. Procédé selon la revendication 1, dans lequel les informations relatives à l'agrégation comprennent un identifiant d'un premier dispositif de réseau ou du second dispositif de réseau auquel le premier dispositif de communication est connecté ou sur lequel le premier dispositif de communication est en veille.

12. Appareil pour une communication sans fil comprenant un processeur, configuré pour mettre en œuvre un procédé selon une ou plusieurs des revendications 1 à 11.

13. Support de stockage non transitoire de programme lisible par ordinateur sur lequel est stocké un code, le code, lorsqu'il est exécuté par un processeur, amène le processeur à mettre en œuvre un procédé selon une ou plusieurs des revendications 1 à 11.
